# EUROPEAN PATENT SPECIFICATION

(11) **EP 2 180 252 B1**
(45) Date of publication and mention of the grant of the patent: **23.03.2016**
(21) Application number: 08167521.7
(22) Date of filing: 24.10.2008
(51) Int. Cl.: F23C 9/08, F23L 7/00

(54) **Method for injecting ballast into an oxycombustion boiler**
Verfahren zum Einspritzen von Ballast in einen Sauerstoffverbrennungsboiler
Procédé pour l'injection de ballast dans une chaudière à oxycombustion

(43) Date of publication of application: 28.04.2010
(73) Proprietor: L'Air Liquide Société Anonyme pour l'Etude et l'Exploitation des Procédés Georges Claude, 75007 Paris (FR)
(72) Inventor: Laurent, Jacky, 78210 Saint-Cyr l'Ecole (FR); Mulon, Jacques, 91300, Massy (FR); Paubel, Xavier, 92290 Chatenay Malabry (FR); Recourt, Patrick, 91460 Marcoussis (FR); Sanchez-Molinero, Ivan, 78000 Versailles (FR); Tsiava, Rémi, 91250 Saint Germain Les Corbeil (FR)
(74) Representative: De Vleeschauwer, Natalie Y.L.D.

(56) References cited:
- EP-A- 1 580 485
- WO-A-2006/054990
- DE-A1- 19 520 720
- US-B1- 6 422 160

## Description

The present invention relates to a method for injecting fuel, oxidant and ballast into an oxycombustion boiler. WO 2006/054990 A1 discloses a method having the features specified in the preamble of claim 1.

In an oxycombustion boiler, in which fuel, oxidant and ballast are injected, it is possible to separate a portion of the ballast in order to introduce it into the boiler at different locations from the burner, or combustion chamber jet. By using a suitable injection arrangement of this type, a number of beneficial effects may be achieved. The profile of the heat transfer flux to the walls of the boiler is smoother and a "gas curtain" is created around the flame so as to spread the heat release along the combustion chamber. This 'gas curtain' is not to be confused with 'sweep gas' which is typically used for protecting flame detectors, out of service injectors, probes, etc. The 'gas curtain' protects the furnace tubes from direct contact with the flame. Greater physical separation of the fuel and oxidant injection compared with the ballast is obtained, thus allowing more direct contact between fuel and oxidant for better combustion of difficult fuels. The ballast may consist of recycled flue gases (whether cold or not), with the advantage of having flame radiation absorption properties with respect to the predominant gases CO₂ and H₂O, or other gases or gas mixtures.

There are existing schemes that recycle ballast into various locations within a boiler. There exist systems using recycle injection into the burner or windbox; recycle injection into furnaces; recycle injection into the burner; and recycle, recreating a synthetic air (mixture of oxygen and recycle flue gases). This flue gas recycle is usually performed by separating one part of the main flue gas stream exiting a boiler, and redirecting it towards the boiler through appropriate ducts and impelled generally with a fan or a suction device, known to the skilled in the art.

There are also existing schemes in which nitrogen is injected in a boiler separately from oxygen (as such described in EP 1 517 085 A2), so as to create either nitrogen-poor or nitrogen rich atmospheres for the purpose of controlling NOₓ emissions. In the present invention, the shielding gas is meant to be essentially devoid of nitrogen, as this invention is directed toward oxy-combustion in boilers. The goal of this oxy-combustion in boilers is to produce an exhaust stream enriched in CO₂, and thereby facilitating CO₂ capture. Typical examples of shielding gas envisaged in the present invention are therefore flue gas recycle from oxy-combustion (composed mainly of CO₂ and H₂O), dried flue gas recycle from oxy-combustion (composed mainly of CO₂, after condensation of moisture) or steam.

When the present method is to be used for combustion with air as oxidant, for example at transient conditions for the oxy-boiler or at start-up of the oxy-boiler, a shielding gas stream may also be composed of flue gas recycle, but in such a case this stream would contain a non-negligible content of nitrogen (over 50% in volume). In other embodiment for this usage of air as oxidant, a shielding gas stream may even be air, which for efficiency reasons can be previously heated. However, these embodiments do not fall under the scope of protection of the present invention.

There are other boiler schemes in which Over Fire Air (OFA) is injected separately from the burners to reduce NOx emissions. This should divide the incorporation of oxidant into the boiler so as to create at the burners a fuel-rich primary zone, while the rest of the oxidant is added at this OFA ports for achieving a complete combustion at a so-called burnout zone. An example is shown in the patent US 5626085 A. In the present invention , thermal gas shielding of regions within the boiler is at issue, and not injections for affecting chemically the flame and the combustion phenomena.

The present invention utilizes the separation of ballast injection into the furnace from the oxygen injection into the burner. There may be an arrangement of the ballast injection into the boiler according to the flux profile. There may be the creation of a gaseous ballast offset, to ensure separation between the flame and the walls of the boiler. There may be the control of the burner ballast/boiler ballast injection ratio according to the various operating parameters (fuel characteristics, boiler operating conditions, temperature levels in the chamber, etc.). The flow of injected ballast (coming from the ratio of burner injection to boiler chamber injection) and the distribution of these injections will be different, depending on the desired effect.

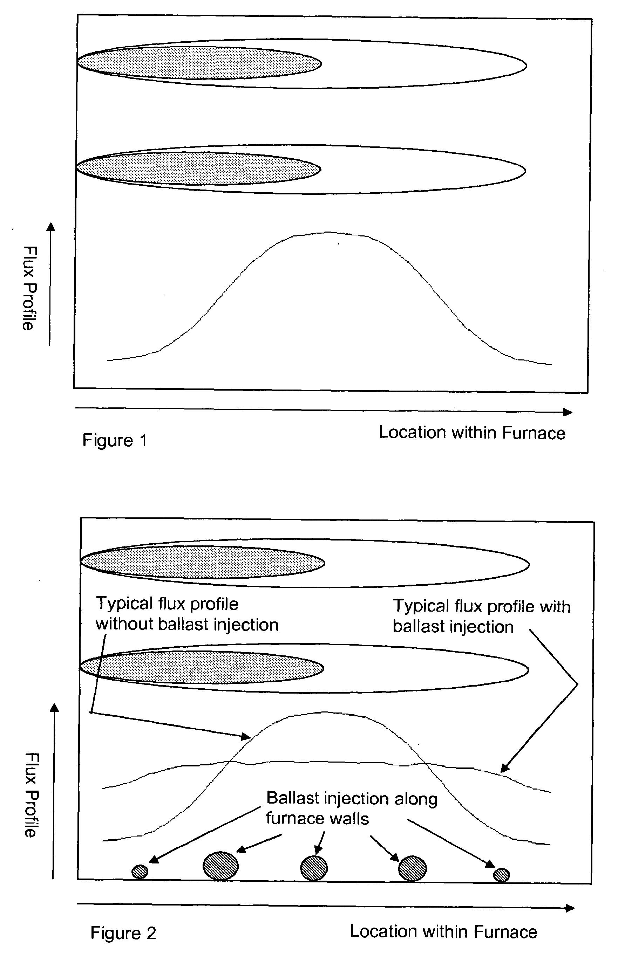

Turning now to Figure 1, the present invention results in the smoothing, levelling or flattening of the flux profile on the walls of the burner. As may be seen in the figure, the transfer profile corresponding to an oxygen flame has a non-uniform shape. For an oxygen flame, the main component of this transfer is radiation, owing to the high flame core temperature and above all the gases that predominantly make up the oxycombustion flue gases, namely CO₂ and H₂O, radiating at high temperature. The non-homogeneous temperature distribution along the length of the flame results in a non-uniform heat flux along the corresponding length of the furnace wall.

This results in non-linear heat transfer issues, potential concerns about furnace wall (or tube wall) temperatures and other problems regarding localized excessive temperature concentrations.

As indicated in Figure 2, the proposed way of making this flux more uniform is to inject the ballast along the side of the flame, along the side of the walls that would ordinarily be absorbing this heat, so as to effectively create a gas curtain. This ballast gas curtain may contain gases that are not transparent to the radiation (i.e. CO₂, H₂O, coming for example from a flue gas recycle), and therefore absorb the radiation of the flame due to the fact of being comparatively cooler. In one embodiment of the current invention, a greater ballast may be injected near the transfer peak to allow the height of the transfer peak to be reduced.

In one embodiment of the present invention a large amount of ballast gas may be injected with two operating positions (e.g. on/off), with the advantage of a simplified process and a simplified control scheme, and with the disadvantage of increased implementation complexity, potential flexibility issues, and the associated pressure drop through the system. In another embodiment of the present invention, a lesser amount of ballast gas injection may incorporate a flow rate regulation in order to end up with the desired flux smoothing performance, with the advantage of greater control and more predictable results, and the disadvantage of a more complex process and a more complex control scheme.

In one embodiment of the present invention the ballast streams are injected vertically parallel with and substantially adjacent to the walls of the combustion chamber in a substantially downward direction. In one embodiment of the present invention the ballast streams are injected vertically parallel with and substantially adjacent to the walls of the combustion chamber in a substantially upward direction. In one embodiment of the present invention the ballast streams are injected horizontally parallel and substantially adjacent to the floor of the combustion chamber. In one embodiment of the present invention the ballast streams are injected horizontally parallel and substantially adjacent to the ceiling of the combustion chamber. In one embodiment of the present invention system data is provided to a control system, and the control system then controls the injection of the ballast streams. The system data may be fuel type, fuel characteristics, boiler operating conditions, exiting flue gas composition, or exiting flue gas temperature. Ballast injection streams rate and distribution can vary as well with boiler load.

In one embodiment of the present invention sensors are mounted in the walls of the combustion chamber. These sensors provide input to a control system. The control system then controls the injection of the ballast streams. The sensors may measure wall temperature, tube skin temperature, water wall fluid temperature, tube fluid temperature, furnace gas temperature, heat flux into the furnace wall, heat flux into the tubes or heat flux into the water walls.

The ballast injection regulation is designed within this context on the flow rate and as a function of the flux measurements on the walls, but it may also take place as a function of the tube skin temperatures, or overall parameters such as the incoming power or the boiler combustion temperature outlet temperature, once the typical flux profile has been established for a combustion chamber configuration and a burner design.

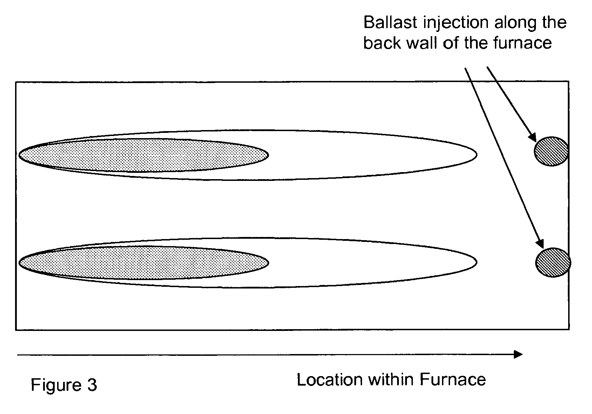

In another embodiment of the present invention, a gaseous offset may also be produced. This offset may be envisaged either for protecting the walls of the boiler from direct contact of the end of the flame (impingement) or for protecting them from lateral contact of the flame. Direct contact of the flame on the walls has devastating effects on the integrity of the metal tubes that make up the walls of the chamber in usual boiler configurations. The points of possible impingement can be predicted in advance, thereby facilitating the arrangement of the injections into the boiler. As indicated in Figure 2, in order to avoid lateral contact of the flames on the tubes, the ballast gas may be injected in parallel with the walls. This configuration may profit from the flux smoothing effect described above. As indicated in Figure 3, in order to avoid direct contact of the flames, which is more probable and at the same time the most damaging, which has the greatest chance of occurring at the end of the flame, the ballast may be injected along the back wall of the furnace.

The ratio of ballast injected in the burners over the ballast injected into the furnace, may depend on a number of operational criteria. This ratio may depend on the fuel characteristics. For example, with a difficult fuel (i.e. pitch difficult to atomize, wet fuels, fuels with a high content of incombustibles, fuels of a dangerous nature, etc.): the ballast injection ratio will be predominantly transferred towards the boiler, in order to allow and oxidant-rich combustion close to the burner. For a fuel with a high nitrogen content: to promote reaction mechanisms that reduce NOx formation, the ballast injection ratio will be displaced towards the burners, so as to create fuel-rich conditions at the flame. This ratio can also vary with boiler load, with a ratio displaced towards the boiler, in order to allow oxygen-rich conditions close to the burner to improve flame stability at low boiler load. Combined to this, the ratio may depend on operating conditions such as tube skin temperature, maximum flux measurement, and other operational criterial known to the skilled artisan.

Other features and advantages of the invention will appear from a reading of the description that follows. Embodiments of the invention are provided as non-limiting examples.
Figure 1 a schematic representation of the variation in heat flux experienced within the side walls of a furnace of a typical boiler as a function of flame profile.
Figure 2 is a schematic representation of the variation in heat flux within the side walls of furnace of a typical boiler, as a function of flame profile, as modified by one embodiment of the present invention.
Figure 3 is a schematic representation one aspect of the present invention.

The present invention is a method for injecting shielding gas into a boiler as defined in claim 1.

The shielding gas streams are located, oriented, and controlled in a manner appropriate to protect an element in the region.

In the present invention said region is selected from the group consisting of:
- the combustion chamber,
- a zone within the combustion chamber of predominantly radiant heat transfer,
- a zone within the combustion chamber of maximum heat flux,
- a zone within the combustion chamber where the heat flux exceeds a predetermined value,
- a zone within the combustion chamber where the flue gas temperature is at a maximum, and
- a zone within the combustion chamber where the flue gas temperature exceeds a predetermined value.

In the present invention, said element is selected from the group consisting of:
- the walls of the combustion chamber,
- the sides of the combustion chamber,
- heat transfer elements positioned within the combustion chamber,
- heat transfer elements positioned within a zone of predominantly radiant heat transfer within the combustion chamber, and
- the boiler elements in contact with the flue gas.

In the present invention, the shielding gas streams may be located, oriented, and controlled such that the shielding gas is injected vertically parallel with and substantially adjacent to the walls of the combustion chamber. In the present invention, the shielding gas streams may be located, oriented, and controlled such that the shielding gas is injected vertically parallel with and substantially adjacent to the heat transfer elements positioned within the combustion chamber. In the present invention the ballast streams may be located, oriented, and controlled such that the shielding gas is injected horizontally parallel and substantially adjacent to the heat transfer elements positioned within the combustion chamber. In the present invention the ballast streams may be located, oriented, and controlled such that the shielding gas is injected horizontally parallel and substantially adjacent to the heat transfer elements positioned within the combustion chamber.

In the present invention, the shielding gas streams may be located, oriented, and controlled such that the shielding gas is injected vertically parallel with and substantially adjacent to one or more zones within the combustion chamber where the heat flux exceeds a predetermined value. In the present invention, the shielding gas streams may be located, oriented, and controlled such that the shielding gas is injected in a direction substantially parallel to the direction of the combustion chamber jet.

In the present invention, the shielding gas streams may be located, oriented, and controlled such that the shielding gas is injected in a direction substantially perpendicular to the direction of the combustion chamber jet. In the present invention, the shielding gas streams may be located, oriented, and controlled such that the shielding gas is injected in a direction substantially convergent to the direction of the combustion chamber jet. In the present invention, the feeding ports for the shielding gas streams into the combustion chamber may be located more than 1 meter away from the burner jet.

In the present invention, the shielding gas streams may be injected such that at least one of the shielding gas streams has a swirl rate between 0,05 and 5, preferably between 0,26 and 1,73. This swirl rate is defined as Iₜ over Iₐ, Iₜ and Iₐ being respectively tangential and axial impulsions of the fluid rotated in the stream.

The present invention may further comprise
- providing system data into a control system,
- controlling the injection of the shielding gas streams with this control system.

In the present invention, the system data may be selected from the group consisting of:
- fuel type,
- fuel characteristics,
- fuel flows,
- oxidant characteristics,
- oxidant flows,
- ballast gas characteristics to the burners,
- ballast gas flows to the burners,
- boiler operating conditions,
- exiting flue gas composition, and
- exiting flue gas temperature.

The present invention may further comprise;
- mounting sensors in or on the elements of the combustion chamber,
- inputting the output of the sensors into a control system,
- controlling the injection of the shielding gas streams with this control system.

In the present invention, the sensors may measure a variable selected from the group consisting of wall temperature, tube skin temperature, water wall fluid temperature, tube fluid temperature, furnace gas temperature, and heat flux. In the present invention, the shielding gas may comprise recycled flue gas. In the present invention, the totality of injection of recycled flue gas into the boiler may be in the form of shielding gas.

In the present invention, the total injection of recycled flue gas into the boiler may be shared among ballast gas injected at the burners level and in the form of shielding gas. In the present invention, the ballast gas injected at the burners level may be injected separately to an oxidant stream. In the present invention, the ballast gas injected at the burners level may be injected after being mixed with an oxidant stream.

In the present invention, the shielding gas streams passing into the combustion chamber region may comprise at least one frequency with an amplitude of vibration, and wherein the boiler system comprises at least one natural frequency. In the present invention, the ratio between the lowest frequency created by at least one of the shielding gas injections and the lowest natural frequency of the boiler system may be comprised between 0 and 0,95 or between 1,05 and 100, and preferably between 0 and 0,6 or between 1,3 and 5.

In the present invention, the flow of the different shielding gas injections may be controlled by the measure of the amplitude of the vibration at a location of the oxy-boiler selected from the group consisting of:
- burners,
- oxy-boiler walls,
- heat exchangers,
- ducts,
- stack,
- fans.

In the present invention, the shielding gas streams may have a controlled composition. In the present invention, the shielding gas streams may have undergone a clean-up treatment before injection. In the present invention, the shielding gas streams may have undergone a partial clean-up treatment before injection, aiming specifically at reducing the concentration of certain components. In the present invention, the shielding gas streams may have undergone a partial clean-up treatment before injection, aiming specifically at reducing the concentration of corrosive components. In the present invention, the shielding gas streams may have undergone a total or partial drying, so as to reduce the moisture content of these streams.

In the present invention, the shielding gas streams may be injected at temperatures between about -50°C to about 1500°C, preferably between about 100°C and about 250°C. In the present invention, the shielding gas streams may be injected at ambient temperature. In the present invention, the shielding gas streams may have undergone thermal exchange against other fluids before injection. In the present invention, the shielding gas streams may have undergone pre-heating before injection. In the present invention, the shielding gas streams may be injected at different temperature levels at each injection point.

## Claims

1. Method for injecting shielding gas into an oxycombustion boiler, said oxycombustion boiler comprising a combustion chamber having walls, whereby at least one fuel stream and at least one oxidant stream, essentially devoid of nitrogen, are fed to the combustion chamber whereby the fuel is substantially combusted to produce at least one combustion chamber jet, flue gas and a heat transfer flux to the walls of the combustion chamber, **characterized in that** a plurality of shielding gas streams, essentially devoid of nitrogen, are passed into a region of the combustion chamber so that the shielding gas streams are located, oriented, and controlled in a manner so as to create a gas curtain and smoothen the heat transfer flux to the walls of the combustion chamber.

2. The method of claim 1, wherein the shielding gas streams are located, oriented, and controlled such that the shielding gas is injected vertically parallel with and substantially adjacent to the walls of the combustion chamber.

3. The method of claim 1, wherein the shielding gas streams are located, oriented, and controlled such that the shielding gas is injected in a direction substantially perpendicular or substantially parallel to the direction of the combustion chamber jet.

4. The method according to any one of the preceding claims, whereby the oxycombustion boiler comprises furnace tubes and whereby the gas curtain protects the furnace tubes from direct contact with a flame.

5. The method of any one of the preceding claims, wherein the shielding gas streams are injected such that at least one of the shielding gas streams has a swirl rate between 0,05 and 5, preferably between 0,26 and 1,73.

6. The method of any of the above claims, further comprising
- mounting sensors in the walls of the combustion chamber, wherein the sensors measure a variable selected from the group consisting of wall temperature, tube skin temperature, water wall fluid temperature, tube fluid temperature, furnace gas temperature, and heat flux,
- inputting the output of the sensors into a control system,
- controlling the injection of the shielding gas streams with this control system.

7. The method of any one of the above claims, whereby the shielding gas is selected from oxycombustion flue gas recycle, dried oxycombustion flue gas recycle and steam.

8. The method of any one of the preceding claims, wherein the shielding gas comprises recycled flue gas.

9. The method of claim 8, whereby the injection of recycled flue gas is shared among ballast gas injection at burner level and shielding gas injection.

10. The method of any of the above claims, wherein the shielding gas streams passing into the combustion chamber region comprises at least one frequency with an amplitude of vibration, and wherein the boiler system comprises at least one natural frequency.

11. The method of claim 10 where the ratio between the lowest frequency created by at least one of the shielding gas injections and the lowest natural frequency of the boiler system is comprised between 0 and 0,95 or between 1,05 and 100, and preferably between 0 and 0,6 or between 1,3 and 5.

## Patentansprüche

1. Verfahren zum Injizieren von Schutzgas in einen Sauerstoffverbrennungskessel, wobei der Sauerstoffverbrennungskessel eine Brennkammer mit Wänden umfasst, wobei mindestens ein Brennstoffstrom und mindestens ein Oxidationsmittelstrom, im Wesentlichen frei von Stickstoff, der Brennkammer zugeführt werden, wodurch der Brennstoff im Wesentlichen verbrannt wird, um mindestens einen Brennkammerstrahl, Rauchgas und einen Wärmeübertragungsfluss an die Wände der Brennkammer zu erzeugen, **dadurch gekennzeichnet, dass** eine Vielzahl von Schutzgasströmen, im Wesentlichen frei von Stickstoff, in einen Bereich der Brennkammer geführt werden, so dass die Schutzgasströme derart angeordnet, ausgerichtet und gesteuert sind, dass sie einen Gasvorhang bilden und den Wärmeübertragungsfluss an die Wände der Brennkammer glätten.

2. Verfahren nach Anspruch 1, wobei die Schutzgasströme derart angeordnet, ausgerichtet und gesteuert sind, dass das Schutzgas vertikal injiziert wird, parallel und im Wesentlichen benachbart zu den Wänden der Brennkammer.

3. Verfahren nach Anspruch 1, wobei die Schutzgasströme derart angeordnet, ausgerichtet und gesteuert sind, dass das Schutzgas in einer Richtung injiziert wird, die im Wesentlichen senkrecht oder im Wesentlichen parallel zur Richtung des Brennkammerstrahls ist.

4. Verfahren nach einem der vorhergehenden Ansprüche, wobei der Sauerstoffverbrennungskessel Ofenrohre umfasst, und wobei der Gasvorhang die Ofenrohre vor direktem Kontakt mit einer Flamme schützt.

5. Verfahren nach einem der vorhergehenden Ansprüche, wobei die Schutzgasströme derart injiziert werden, dass mindestens einer der Schutzgasströme eine Wirbelrate zwischen 0,05 und 5, vorzugsweise zwischen 0,26 und 1,73 aufweist.

6. Verfahren nach einem der oben angegebenen Ansprüche, weiter umfassend
- Montagesensoren in den Wänden der Brennkammer, wobei die Sensoren eine Variable messen, ausgewählt aus der Gruppe, bestehend aus Temperatur der Wand, Temperatur der Schlauchhülle, Fluidtemperatur der Wasserwand, Fluidtemperatur des Schlauchs, Gastemperatur des Ofens und Hitzefluss
- Eingeben der Ausgabe der Sensoren in ein Steuersystem,
- Steuern der Injektion des Schutzgasstroms mit diesem Steuersystem.

7. Verfahren nach einem der oben angegebenen Ansprüche, wobei das Schutzgas ausgewählt ist aus der Sauerstoffverbrennungs-Rauchgasrückführung, der getrockneten Sauerstoffverbrennungs-Rauchgasrückführung und Dampf.

8. Verfahren nach einem der vorhergehenden Ansprüche, wobei das Schutzgas rückgeführtes Rauchgas umfasst.

9. Verfahren nach Anspruch 8, wobei die Injektion von rückgeführtem Rauchgas zwischen Ballastgas-Injektion auf der Ebene des Brenners und Schutzgas-Injektion geteilt ist.

10. Verfahren nach einem der oben angegebenen Ansprüche, wobei die Schutzgasströme, die in den Bereich der Brennkammer führen, mindestens eine Frequenz mit einer Vibrationsamplitude umfassen, und wobei das Kesselsystem mindestens eine natürliche Frequenz umfasst.

11. Verfahren nach Anspruch 10, wobei: das Verhältnis zwischen der niedrigsten Frequenz, erzeugt durch mindestens eine der Schutzgas-Injektionen und der niedrigsten natürlichen Frequenz des Kesselsystems zwischen 0 und 0,95 oder zwischen 1,05 und 100 liegt, und vorzugsweise zwischen 0 und 0,6 oder zwischen 1,3 und 5.

## Revendications

1. Procédé d'injection d'un gaz protecteur dans une chaudière à oxycombustion, ladite chaudière à oxycombustion comprenant une chambre de combustion ayant des parois, dans lequel au moins un courant de combustible et au moins un courant d'oxydant, essentiellement dépourvu d'azote, sont introduits dans la chambre de combustion, dans lequel le combustible est substantiellement brûlé pour produire au moins un jet de chambre à combustion, un gaz de fumée et un flux de transfert thermique vers les parois de la chambre de combustion, **caractérisé en ce qu'**une pluralité de courants de gaz protecteur, essentiellement dépourvus d'azote, sont passés dans une région de la chambre de combustion de façon que les courants de gaz protecteur soient localisés, orientés et régulés pour créer un rideau de gaz et atténuer le flux de transfert thermique vers les parois de la chambre de combustion.

2. Procédé selon la revendication 1, dans lequel les courants de gaz protecteur sont localisés, orientés et régulés de façon que le gaz protecteur soit injecté verticalement et parallèlement et sensiblement adjacent aux parois de la chambre de combustion.

3. Procédé selon la revendication 1, dans lequel les courants de gaz protecteur sont localisés, orientés et régulés de façon que le gaz protecteur soit injecté dans une direction sensiblement perpendiculaire ou sensiblement parallèle à la direction du jet de chambre de combustion.

4. Procédé selon l'une quelconque des revendications précédentes, dans lequel la chaudière à oxycombustion comprend des tubes de four et dans lequel le rideau de gaz protège les tubes de four contre un contact direct avec une flamme.

5. Procédé selon l'une quelconque des revendications précédentes, dans lequel les courants de gaz protecteur sont injectés de façon qu'au moins un des courants de gaz protecteur ait un taux de turbulence entre 0,05 et 5, de préférence entre 0,26 et 1,73.

6. Procédé selon l'une quelconque des revendications précédentes, comprenant en outre
- le montage de capteurs dans les parois de la chambre de combustion, dans lequel les capteurs mesurent une variable choisie dans le groupe constitué par la température de la paroi, la température du revêtement d'un tube, la température du fluide d'un mur d'eau, la température du fluide d'un tube, la température du gaz du four et le flux thermique,
- l'entrée de la sortie des capteurs dans un système de commande,
- la commande de l'injection des courants de gaz protecteur avec ce système de commande.

7. Procédé selon l'une quelconque des revendications précédentes, dans lequel le gaz protecteur est choisi parmi un gaz de recyclage de fumée d'oxycombustion, un gaz sec de recyclage de fumée d'oxycombustion et la vapeur d'eau.

8. Procédé selon l'une quelconque des revendications précédentes, dans lequel le gaz protecteur comprend un gaz de fumée recyclé.

9. Procédé selon la revendication 8, dans lequel l'injection du gaz de fumée recyclé est partagée entre l'injection d'un gaz de ballast au niveau du brûleur et l'injection d'un gaz protecteur.

10. Procédé selon l'une quelconque des revendications précédentes, dans lequel les courants de gaz protecteur passant dans la région de la chambre de combustion comprennent au moins une fréquence avec une amplitude de vibration, et dans lequel le système de chaudière comprend au moins une fréquence naturelle.

11. Procédé selon la revendication 10, dans lequel le rapport entre la fréquence la plus basse créée par au moins une des injections de gaz protecteur et la fréquence naturelle la plus basse du système de chaudière est compris entre 0 et 0,95 ou entre 1,05 et 100, et de préférence entre 0 et 0,6 ou entre 1,3 et 5.
